(19) Europäisches Patentamt
European Patent Office
Office européen des brevets

(11) **EP 2 624 199 A1**

(12) **DEMANDE DE BREVET EUROPEEN**

(43) Date de publication:
**07.08.2013 Bulletin 2013/32**

(51) Int Cl.:
***G06Q 90/00*** *(2006.01)*

(21) Numéro de dépôt: **13153478.6**

(22) Date de dépôt: **31.01.2013**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME**<br><br>(30) Priorité: **01.02.2012 BE 201200064**<br><br>(71) Demandeur: **CALLWOOD sprl**<br>**1050 Bruxelles (BE)** | (72) Inventeur: **D'Oultremont, Géraud**<br>**1030 Bruxelles (BE)**<br><br>(74) Mandataire: **Pecher, Nicolas et al**<br>**Pecher & de Groote sprl**<br>**Centre Monnet**<br>**Avenue Jean Monnet, 1**<br>**1348 Louvain-la-Neuve (BE)** |

(54) **Ordinateur et méthode pour optimiser le fonctionnement d'une scierie**

(57) Selon un premier aspect, l'invention se rapporte à un ordinateur (10) permettant de prédire le volume de bois d'une parcelle à fournir en un temps $t > 0$, $Y(t)$, pour optimiser le fonctionnement d'une scierie. L'ordinateur (10) comprend une unité de calcul (30) pour déterminer selon la formule suivante :

$$Y(t) = VT_0 \left\{ 1 + \left[ \frac{PparcT_0 * (1 + \%croi)^t}{(1 - \%opt) * Poptac} \right]^{1/t} - 1 - \%Rnat \right\} * t$$

ledit volume de bois à fournir à ladite scierie au temps $t$, $Y(t)$, pour optimiser son fonctionnement. $\%Rnat$ représente un taux de risques naturels ; $\%opt$ est une correction pour tenir compte de coupes futures de bois ; $VT_0$ est un volume initial de bois de la parcelle ; $PparcT_0$ est une valeur initiale du bois de la parcelle ; $\%croi$ est un taux de croissance de bois et $Poptac$ est un coût que la scierie est prête à payer pour se procurer le volume de bois au temps $t > 0$, $Y(t)$.

Fig. 1

EP 2 624 199 A1

## Description

### Domaine technique

Selon un premier aspect, l'invention se rapporte à un ordinateur pour optimiser le fonctionnement d'une scierie. Selon un deuxième aspect, l'invention se rapporte à une méthode pour optimiser le fonctionnement d'une scierie.

### Etat de la technique

Une scierie a besoin de bois pour fonctionner. Comme d'autres industries, les coûts liés à l'exploitation d'une scierie augmentent quand elle ne tourne pas. L'arrêt d'une scierie peut notamment être dû à une absence de bois pour l'approvisionner. Cela se passe notamment suite à une catastrophe naturelle. A titre d'exemple, une scierie peut être arrêtée à la suite d'une tempête ayant touché une parcelle de bois à laquelle la scierie avait prévu de s'approvisionner. D'autres exemples de catastrophes naturelles pouvant toucher une telle parcelle de bois sont : incendie, poids de la neige cassant certains arbres, dégât du gibier, grêle.

Il est important pour une scierie de prévoir et d'anticiper de tels risques de manques d'approvisionnement en bois. Les inventeurs proposent un ordinateur et une méthode pour déterminer un volume de bois à fournir à un temps t > 0 pour optimiser le fonctionnement de la scierie c'est-à-dire pour éviter des manques d'approvisionnement en bois.

### Résumé de l'invention

Selon un premier aspect, un des buts de la présente invention est de fournir un ordinateur pour déterminer un volume de bois d'une parcelle à fournir à une scierie à un temps $t > 0$, $Y(t)$, pour optimiser le fonctionnement de ladite scierie et comprenant:

- au moins un moyen d'entrée pour fournir :

  ○ un taux de risques naturels, *%Rnat;*
  ○ une correction tenant compte de coupes futures de bois sur ladite parcelle, *%0pt* ;
  ○ un volume de bois initial de ladite parcelle, $VT_0$, à un temps initial $T_0$;
  ○ une valeur initiale du bois de la dite parcelle, $PparcT_0$, audit temps initial $T_0$;
  ○ un taux de croissance de bois de ladite parcelle, *%croi;*
  ○ un coût, *Poptac,* que ladite scierie est prête à payer pour se procurer le volume de bois au temps *t, Y(t);*

- une unité de calcul pour déterminer selon la formule suivante :

$$Y(t) = VT_0 \left\{ 1 + \left[ \frac{PparcT_0 * (1 + \%croi)^t}{(1 - \%opt) * Poptac} \right]^{1/t} - 1 - \%Rnat \right\} * t$$

ledit volume de bois de ladite parcelle à fournir à ladite scierie au temps *t, Y(t),* pour optimiser le fonctionnement de ladite scierie s'approvisionnant à ladite parcelle.

Ainsi, la scierie peut prédire, grâce à l'ordinateur de l'invention, le volume de bois de la parcelle à fournir au temps *t* > 0 pour optimiser son fonctionnement. Grâce à ce volume de bois fourni au temps *t > 0, Y(t),* tout manque d'approvisionnement en bois peut être évité.

De manière préférée, le coût *Poptac* est donné par la formule suivante :

$$Poptac = \frac{PparcT_0[1 + \%croi]^t}{(1 + \%actu)^t}(1 - \%Opt) + (0.5\,Pcw)$$

où :

- $Pcw = y\,PparcT_0[1 + \%croi]^t,$

y représentant un pourcentage de facturation à un tiers.

De manière préférée, ladite unité de calcul (30) est en outre apte à déterminer un prix reçu par un vendeur de bois de ladite parcelle, *POptve,* selon la formule suivante :

$$POptve = \frac{PparcT_0[1+\%croi]^t}{(1+\%actu)^t}(1 - \%Opt) - (0.5\,Pcw)\,.$$

où :

- $Pcw = y\,PparcT_0[1+\%croi]^t$,

y représentant un pourcentage de facturation à un tiers.

De manière préférée, le pourcentage de facturation à un tiers, *y*, est compris entre 0.01 et 0.1.

De manière préférée, le pourcentage de facturation à un tiers, *y*, est compris entre 0.02 et 0.08.

De manière préférée, le temps *t* est donné par :

$$t = z + \frac{w-z}{2},$$

où :

- *z* représente une période de temps minimale pour l'approvisionnement dudit volume de bois à partir dudit temps initial $T_0$ ;
- *w* représente une période de temps maximale pour l'approvisionnement dudit volume de bois à partir dudit temps initial $T_0$.

De préférence, ladite période de temps maximale, *w*, est comprise entre 3 et 5 ans. De préférence, ladite période de temps minimale, *z*, est comprise entre 1 et 3 ans.

Selon un deuxième aspect, un des buts de la présente invention est de fournir une méthode pour déterminer un volume de bois d'une parcelle à fournir à une scierie à un temps *t* > 0, *Y(t),* pour optimiser le fonctionnement de ladite scierie et comprenant les étapes suivantes :

- fournir un taux de risques naturels, *%Rnat*;

- fournir une correction tenant compte de coupes futures de bois sur ladite parcelle, *%0pt* ;

- fournir un volume de bois initial de ladite parcelle, $VT_0$, à un temps initial $T_0$;

- fournir une valeur initiale du bois de la dite parcelle, $PparcT_0$, audit temps initial $T_0$;

- fournir un taux de croissance de bois de ladite parcelle, *%croi;*

- fournir un coût, *Poptac,* que ladite scierie est prête à payer pour se procurer ledit volume de bois au temps *t, Y(t);*

- calculer selon la formule suivante :

$$Y(t) = VT_0\left\{1 + \left[\frac{PparcT_0*(1+\%croi)^t}{(1-\%opt)*Poptac}\right]^{1/t} - 1 - \%Rnat\right\}*t$$

ledit volume de bois de ladite parcelle à fournir à ladite scierie au temps *t, Y(t),* pour optimiser le fonctionnement de ladite scierie s'approvisionnant à ladite parcelle.

De préférence, le coût *Poptac* est donné par la formule suivante :

$$Poptac = \frac{PparcT_0[1 + \%croi]^t}{(1 + \%actu)^t}(1 - \%Opt) + (0.5\,Pcw)$$

où :

- *Pcw = y PparcT$_0$[1 + %croi]$^t$,*

*y* représentant un pourcentage de facturation à un tiers.

De préférence, la méthode de l'invention comprend en outre l'étape suivante :

- déterminer un prix reçu par un vendeur de bois de ladite parcelle, *POptve,* selon la formule suivante :

$$POptve = \frac{PparcT_0[1+\%croi]^t}{(1+\%actu)^t}(1 - \%Opt) - (0.5\,Pcw)\,.$$

où :
- *Pcw = y PparcT$_0$[1 + %croi]$^t$,*

*y* représentant un pourcentage de facturation à un tiers.

De préférence, le pourcentage de facturation à un tiers, *y*, est compris entre 0.01 et 0.1. De manière encore préférée, le pourcentage de facturation à un tiers, y, est compris entre 0.02 et 0.08.

De préférence, le temps t est donné par :

$$t = z + \frac{w-z}{2},$$

où :

- *z* représente une période de temps minimale pour l'approvisionnement dudit volume de bois à partir dudit temps initial *T$_0$* ;
- *w* représente une période de temps maximale pour l'approvisionnement dudit volume de bois à partir dudit temps initial *T$_0$*.

De préférence, la période de temps minimale, *z*, est comprise entre 1 et 3 ans. De préférence, la période de temps maximale, *w*, est comprise entre 3 et 5 ans.

**Brève description des dessins**

Ces aspects ainsi que d'autres aspects de l'invention seront clarifiés dans la description détaillée de modes de réalisation particuliers de l'invention, référence étant faite aux dessins des figures, dans lesquelles:

- la Fig.1 montre un ordinateur selon l'invention ;
- la Fig.2 montre une échelle de temps.
  Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

**Description détaillée de certains modes de réalisation de l'invention**

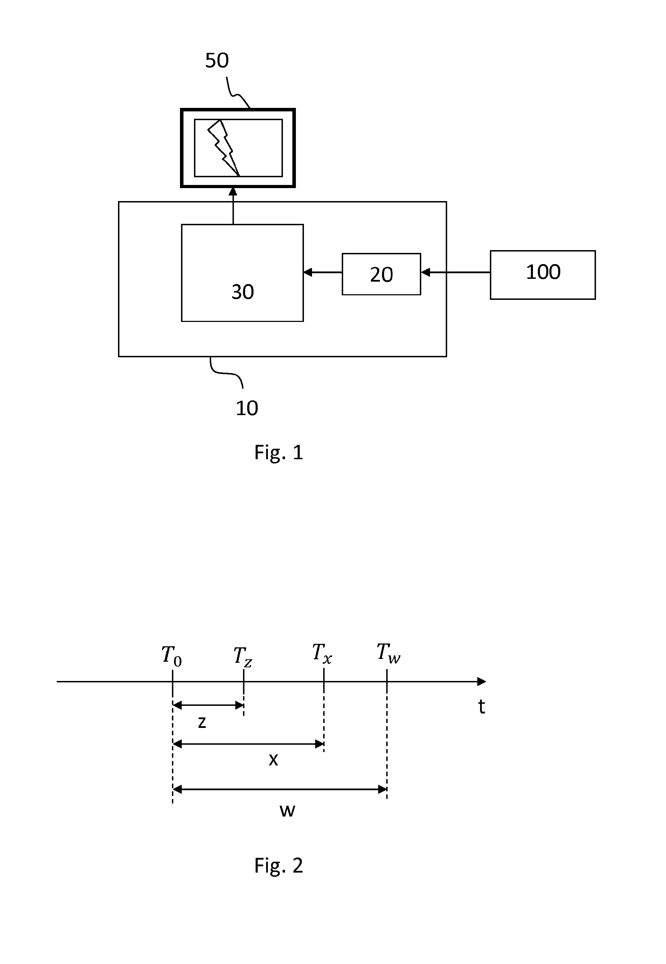

L'invention se rapporte, selon un premier aspect à un ordinateur 10 (ou unité de contrôle) pour optimiser le fonctionnement d'une scierie s'approvisionnant à une parcelle de bois. La figure 1 montre un tel ordinateur 10. Il comprend un ou plusieurs moyen(s) d'entrée 20 permettant de recevoir et de transmettre vers une unité de calcul 30 les informations suivantes (ou paramètres d'entrée 100) :

  ○ un taux de risques naturels, *%Rnat;*
  ○ une correction tenant compte de coupes futures de bois sur ladite parcelle, *%Opt* ;
  ○ un volume de bois initial de ladite parcelle, $VT_0$, à un temps initial $T_0$;
  ○ une valeur initiale du bois de la dite parcelle, $PparcT_0$, audit temps initial $T_0$;
  ○ un taux de croissance de bois de ladite parcelle, *%croi;*
  ○ un coût, *Poptac,* que ladite scierie est prête à payer pour se procurer le volume de bois au temps *t, Y(t).*

Un exemple de taux de croissance du bois d'une parcelle, *%croi,* correspond à l'accroissement volumique du bois de la parcelle. On utilisera alors préférentiellement un taux de croissance *%croi* théorique en mètres cubes. Le taux de risques naturels, *%Rnat,* tient compte des risques. Il peut par exemple s'agir de : incendies, poids de la neige, grêle, tempête, dégât engendré par du gibier.

L'ordinateur 10 de l'invention comprend une unité de calcul 30 qui permet de calculer le volume de bois à fournir à la scierie en un temps $t > 0$, $Y(t)$, pour optimiser le fonctionnement de la scierie. L'unité de calcul 30 détermine ce volume de bois, $Y(t)$, selon la formule suivante :

$$Y(t) = VT_0 \left\{ 1 + \left[ \frac{PparcT_0 * (1 + \%croi)^t}{(1 - \%opt) * Poptac} \right]^{1/t} - 1 - \%Rnat \right\} * t.$$

De préférence, le résultat de ce calcul est envoyé vers un écran 50 permettant à un utilisateur de le visualiser.

La figure 2 montre sur une ligne de temps différents moments importants pour l'approvisionnement en bois d'une scierie ainsi que les périodes entre ces différents moments. Le moment de la contractualisation (moment où la scierie et le propriétaire de la parcelle se mettent d'accord pour l'achat d'une certaine quantité de bois) est appelé temps initial, $T_0$. Le moment de la levée d'option est dénoté $T_x$. Le paramètre *x* représente le nombre d'unités de temps entre $T_0$ et $T_x$. Ce paramètre *x* peut être exprimé en mois, trimestres, années par exemple. Le moment le plus éloigné pour la levée d'option est dénoté $T_w$, tandis que le moment le plus proche pour lever l'option est dénoté $T_z$. Le paramètre *w* (respectivement *z*) représente le nombre d'unités de temps entre $T_0$ et $T_w$ (respectivement entre $T_0$ et $T_z$). Les paramètres *w* et *z* peuvent être exprimés en mois, trimestres, années par exemple. Le volume initial du bois de ladite parcelle, $VT_0$, est le volume de bois que comprend la parcelle au temps $T_0$. La valeur initiale du bois de la parcelle, $PparcT_0$ est préférentiellement donnée par $PparcT_0 = VT_0 \, PMT_0$ où $PMT_0$ est le prix initial par unité de volume du bois de la parcelle: le volume initial du bois de la parcelle, $VT_0$, est multiplié par le prix initial par unité de volume du bois de la parcelle, $PMT_0$.

De préférence, le coût, *Poptac,* que ladite scierie est prête à payer pour se procurer le volume de bois au temps *t, Y(t)* est donné par la formule suivante :

$$POptac = \frac{PparcT_0 [1 + \%croi]^t}{(1 + \%actu)^t} (1 - \%Opt) + (0.5 \, Pcw) ,$$

où

-  $Pcw = y \, PparcT_0 [1 + \%croi]^t,$

*y* représentant un pourcentage de facturation à un tiers.

Un tiers désigne préférentiellement une personne ou une société différente de l'acheteur (scierie) et du vendeur. Il s'agit par exemple d'un intermédiaire et facilitateur impartial entre le vendeur et l'acheteur, tant dans le cadre du processus de conclusion du contrat que dans le cadre de son exécution.

De préférence, l'unité de calcul 30 est apte à déterminer un prix reçu par une vendeur de bois (propriétaire de la parcelle de bois par exemple), *POptve,* selon la formule suivante :

$$POptve = \frac{PparcT_0[1+\%croi]^t}{(1+\%actu)^t}(1 - \%Opt) - (0.5\,Pcw)\,.$$

où :

- $Pcw = y\,PparcT_0[1 + \%croi]^t$,

y représentant un pourcentage de facturation à un tiers.

Le temps $t$ est de manière préférée donné par $t = z + \frac{w-z}{2}$ et représente la moitié du temps imparti pour lever l'option. Ainsi, si l'option est à lever entre $z$ = 3 ans et $w$ = 5 ans (comptés à partir du temps initial $T_0$), le temps $z + \frac{w-z}{2}$ vaut 4 ans. La grandeur $Pcw$ est donc obtenue en multipliant le pourcentage $y$ à la grandeur $PparcT_0[1 + \%croi]^t$ qui représente la valeur du bois de la parcelle au temps $t = z + \frac{w-z}{2}$..

De manière préférée, le pourcentage de facturation à un tiers, $y$, est compris entre 0.01 et 0.1, et de manière encore préférée, entre 0.02 et 0.08. La période de temps maximale pour lever l'option à partir de $T_0$, $w$, est préférentiellement comprise entre 0 et 7 ans, et de manière encore préférée entre 3 et 5 ans, tandis que la période de temps minimale pour lever l'option à partir de $T_0$, $z$, est préférentiellement comprise entre 0 et 7 ans et de manière encore préférée entre 1 et 3 ans.

L'ordinateur ou unité de contrôle 10 de l'invention peut être un simple ordinateur à un seul processeur qui inclut une mémoire interne pour stocker un ou plusieurs programme(s) ou instruction(s). La mémoire interne comprend à la fois une partie volatile et une partie non volatile. L'homme du métier reconnaîtra que la mémoire interne peut être remplacée par n'importe quel support connu de l'homme du métier tel un CD-ROM, une clé USB par exemple. Cependant, l'ordinateur 10 de l'invention doit être programmé pour permettre de réaliser les opérations décrites ci-dessus.

Selon un deuxième aspect, l'invention se rapporte à une méthode pour déterminer un volume de bois d'une parcelle à fournir à une scierie à un temps $t > 0$, $Y(t)$, pour optimiser le fonctionnement de ladite scierie et comprenant les étapes suivantes :

- fournir un taux de risques naturels, $\%Rnat$;

- fournir une correction tenant compte de coupes futures de bois sur ladite parcelle, $\%Opt$ ;

- fournir un volume de bois initial de ladite parcelle, $VT_0$, à un temps initial $T_0$;

- fournir une valeur initiale du bois de la dite parcelle, $PparcT_0$, audit temps initial $T_0$;

- fournir un taux de croissance de bois de ladite parcelle, $\%croi$;

- fournir un coût, $Poptac$, que ladite scierie est prête à payer pour se procurer ledit volume de bois au temps $t$, $Y(t)$;

- calculer selon la formule suivante :

$$Y(t) = VT_0\left\{1 + \left[\frac{PparcT_0 * (1 + \%croi)^t}{(1 - \%opt) * Poptac}\right]^{1/t} - 1 - \%Rnat\right\} * t$$

ledit volume de bois de ladite parcelle à fournir à ladite scierie au temps $t$, $Y(t)$, pour optimiser le fonctionnement de ladite scierie s'approvisionnant à ladite parcelle.

Différents paramètres peuvent influencer le coût payé par un acheteur d'une parcelle de bois, $POptac$, et le prix reçu par un vendeur pour cette parcelle de bois. Certains de ces paramètres sont liés au bois de la parcelle et d'autres au marché des matières premières et au marché du prix de bois plus particulièrement. Des exemples de tels paramètres sont : un taux d'inflation, *%inf*, un taux de croissance du bois d'une parcelle, *%croi,* un taux d'actualisation tenant compte de risques, *%actu.* Dans une version préférée, le taux d'actualisation, *%actu,* tient aussi compte des risques liés à la volatilité du marché local ou international en matière premières et en bois, et/ou de risques liés à des variations de taux de change entre différentes monnaies.

Généralement, il existe une certaine période de temps non nulle entre le moment d'une contractualisation pour l'achat/vente de bois d'une parcelle et le moment de la levée de l'option engendrée par cette contractualisation. Une levée d'option est un acte par lequel un acheteur décide d'acquérir un bien (ici du bois) aux conditions prévues lors de la contractualisation. Comme mentionné ci-dessous, la figure 2 montre sur une ligne de temps différents moments ainsi que des périodes entre ces différents moments et un temps initial, $T_0$. Pour la méthode de l'invention, il faut fournir volume initial du bois de ladite parcelle, $VT_0$, c'est-à-dire le volume de bois que comprend la parcelle au temps $T_0$. Il faut également fournir une valeur initiale du bois de la parcelle, $PparcT_0$, par exemple par la formule suivante : $PparcT_0$ = $VT_0\,PMT_0$ : le volume initial du bois de la parcelle, $VT_0$, est multiplié par le prix initial par unité de volume du bois de la parcelle, $PMT_0$.

De préférence, le coût (ou prix) payé par un acheteur du bois de la parcelle est donné par la formule suivante :

$$POptac = \frac{PparcT_0[1+\%\inf\%croi]^t}{(1+\%actu)^t}(1-\%Opt)+(0.5\,Pcw).$$

De préférence, la méthode de l'invention permet également de déterminer le prix reçu par un vendeur de la parcelle comprenant le bois, *POptve,* et ce de manière définitive, selon la formule suivante :

$$POptve = \frac{PparcT_0[1+\%\inf\%croi]^t}{(1+\%actu)^t}(1-\%Opt)-(0.5\,Pcw).$$

Dans ces deux formules,

$$Pcw = y\,PparcT(t),$$

avec

$$PparcT(t) = PparcT_0\left[1+(\%\inf\%croi)\right]^t$$

et où *y* représente un pourcentage de facturation à un tiers. Un tiers désigne typiquement une personne ou une société différente de l'acheteur et du vendeur. Il s'agit typiquement d'un intermédiaire et facilitateur impartial entre le vendeur et l'acheteur, tant dans le cadre du processus de conclusion du contrat que dans le cadre de son exécution. Le paramètre *%Opt* représente une correction tenant compte de coupes futures de bois. Le paramètre *%inf* représente un taux d'inflation et peut être omis. L'inclusion du paramètre *%inf* représente une variante préférée.

La grandeur *PparcT(t)* représente la valeur du bois de la parcelle au temps *t* qui est de préférence donné par $t = z + \frac{w-z}{2}$. Le temps $t = z + \frac{w-z}{2}$ représente alors la moitié du temps imparti pour lever l'option. Ainsi, si l'option est à lever entre *z* = 3 ans et *w* = 5 ans (comptés à partir du temps initial $T_0$), le temps $z + \frac{w-z}{2}$ vaut 4 ans.

La grandeur *Pcw* est donc obtenue en multipliant le pourcentage y à la grandeur $PparcT\left(z+\frac{w-z}{2}\right)$.

Dans une version préférée, la méthode de l'invention comprend en outre l'étape suivante : déterminer un coût à payer par l'acheteur pour acquérir le bois de ladite parcelle en un temps $x$ compté à partir dudit temps initial, $T_0$, selon la formule suivante :

$$PloptTx = (1 - \%Opt)(PparcT_0)[1 + (\% \inf \%croi)]^x.$$

Dans cette dernière formule, $PloptTx$ représente le coût à payer par l'acheteur pour acquérir le bois de la parcelle en un temps $x$. Les différentes périodes de temps $x$, $w$, $z$ sont plus grandes ou égales à zéro ($x, w, z \geq 0$).

De manière préférée, le pourcentage de facturation à un tiers, $y$, est compris entre 0.01 et 0.1, et de manière encore préférée, entre 0.02 et 0.08. La période de temps maximale pour lever l'option à partir de $T_0$, $w$, est préférentiellement comprise entre 0 et 7 ans, et de manière encore préférée entre 3 et 5 ans, tandis que la période de temps minimale pour lever l'option à partir de $T_0$, $z$, est préférentiellement comprise entre 0 et 7 ans et de manière encore préférée entre 1 et 3 ans.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. En particulier, l'invention concerne également les combinaisons des caractéristiques techniques des modes de réalisation énoncés plus haut. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Selon un premier aspect, l'invention se rapporte à un ordinateur 10 permettant de prédire le volume de bois d'une parcelle à fournir en un temps $t > 0$, $Y(t)$, pour optimiser le fonctionnement d'une scierie. L'ordinateur 10 comprend une unité de calcul 30 pour déterminer selon la formule suivante :

$$Y(t) = VT_0 \left\{ 1 + \left[ \frac{PparcT_0 * (1 + \%croi)^t}{(1 - \%opt) * Poptac} \right]^{1/t} - 1 - \%Rnat \right\} * t$$

ledit volume de bois à fournir à ladite scierie au temps $t$, $Y(t)$, pour optimiser son fonctionnement. $\%Rnat$ représente un taux de risques naturels ; $\%opt$ est une correction pour tenir compte de coupes futures de bois ; $VT_0$ est un volume initial de bois de la parcelle ; $PparcT_0$ est une valeur initiale du bois de la parcelle ; $\%croi$ est un taux de croissance de bois et $Poptac$ est un coût que la scierie est prête à payer pour se procurer le volume de bois au temps $t > 0$, $Y(t)$. Selon un deuxième aspect, l'invention se rapporte à une méthode.

**Revendications**

1. Ordinateur (10) pour déterminer un volume de bois d'une parcelle à fournir à une scierie à un temps $t > 0$, $Y(t)$, pour optimiser le fonctionnement de ladite scierie et comprenant:

  - au moins un moyen d'entrée (20) pour fournir :

    ○ un taux de risques naturels, $\%Rnat$;
    ○ une correction tenant compte de coupes futures de bois sur ladite parcelle, $\%Opt$ ;
    ○ un volume de bois initial de ladite parcelle, $VT_0$, à un temps initial $T_0$;
    ○ une valeur initiale du bois de la dite parcelle, $PparcT_0$, audit temps initial $T_0$;
    ○ un taux de croissance de bois de ladite parcelle, $\%croi$;
    ○ un coût, $Poptac$, que ladite scierie est prête à payer pour se procurer le volume de bois au temps $t$, $Y(t)$;

  - une unité de calcul (30) pour déterminer selon la formule suivante :

$$Y(t) = VT_0 \left\{ 1 + \left[ \frac{PparcT_0 * (1 + \%croi)^t}{(1 - \%opt) * Poptac} \right]^{1/t} - 1 - \%Rnat \right\} * t$$

ledit volume de bois de ladite parcelle à fournir à ladite scierie au temps *t, Y(t),* pour optimiser le fonctionnement de ladite scierie s'approvisionnant à ladite parcelle.

2. Ordinateur (10) selon la revendication 1 **caractérisé en ce que** le coût *Poptac* est donné par la formule suivante :

$$Poptac = \frac{PparcT_0[1 + \%croi]^t}{(1 + \%actu)^t}(1 - \%Opt) + (0.5\,Pcw)$$

où :

- *Pcw = y PparcT$_0$[1 + %croi]$^t$,*

*y* représentant un pourcentage de facturation à un tiers.

3. Ordinateur (10) selon l'une quelconque des revendications précédentes **caractérisé en ce que** ladite unité de calcul (30) est en outre apte à déterminer un prix reçu par un vendeur de bois de ladite parcelle, *POptve,* selon la formule suivante :

$$POptve = \frac{PparcT_0[1 + \%croi]^t}{(1 + \%actu)^t}(1 - \%Opt) - (0.5\,Pcw)\,.$$

où :

- *Pcw = y PparcT$_0$[1 + %croi]$^t$,*

*y* représentant un pourcentage de facturation à un tiers.

4. Ordinateur (10) selon la revendication 2 ou 3 **caractérisé en ce que** le pourcentage de facturation à un tiers, *y*, est compris entre 0.01 et 0.1.

5. Ordinateur (10) selon l'une quelconque des revendications 2 à 4 **caractérisé en ce que** le pourcentage de facturation à un tiers, *y*, est compris entre 0.02 et 0.08.

6. Ordinateur (10) selon l'une quelconque des revendications précédentes **caractérisé en ce que** le temps *t* est donné par :

$$t = z + \frac{w - z}{2},$$

où :

- *z* représente une période de temps minimale pour l'approvisionnement dudit volume de bois à partir dudit temps initial $T_0$ ;
- *w* représente une période de temps maximale pour l'approvisionnement dudit volume de bois à partir dudit temps initial $T_0$.

7. Ordinateur (10) selon la revendication 6 **caractérisé en ce que** la période de temps minimale, *z*, est comprise entre 1 et 3 ans.

**8.** Ordinateur (10) selon la revendication 6 ou 7 **caractérisé en ce que** la période de temps maximale, w, est comprise entre 3 et 5 ans.

**9.** Méthode pour déterminer un volume de bois d'une parcelle à fournir à une scierie à un temps $t > 0$, $Y(t)$, pour optimiser le fonctionnement de ladite scierie et comprenant les étapes suivantes :

- fournir un taux de risques naturels, $\%Rnat$;
- fournir une correction tenant compte de coupes futures de bois sur ladite parcelle, $\%Opt$ ;
- fournir un volume de bois initial de ladite parcelle, $VT_0$, à un temps initial $T_0$;
- fournir une valeur initiale du bois de la dite parcelle, $PparcT_0$, audit temps initial $T_0$;
- fournir un taux de croissance de bois de ladite parcelle, $\%croi$;
- fournir un coût, $Poptac$, que ladite scierie est prête à payer pour se procurer ledit volume de bois au temps $t$, $Y(t)$;
- calculer selon la formule suivante :

$$Y(t) = VT_0 \left\{ 1 + \left[ \frac{PparcT_0 * (1 + \%croi)^t}{(1 - \%opt) * Poptac} \right]^{1/t} - 1 - \%Rnat \right\} * t$$

ledit volume de bois de ladite parcelle à fournir à ladite scierie au temps $t$, $Y(t)$, pour optimiser le fonctionnement de ladite scierie s'approvisionnant à ladite parcelle.

**10.** Méthode selon la revendication 9 **caractérisée en ce que** le coût $Poptac$ est donné par la formule suivante :

$$Poptac = \frac{PparcT_0 [1 + \%croi]^t}{(1 + \%actu)^t} (1 - \%Opt) + (0.5\,Pcw)$$

où :

- $Pcw = y\,PparcT_0 [1 + \%croi]^t$,

$y$ représentant un pourcentage de facturation à un tiers.

**11.** Méthode selon la revendication 9 ou 10 comprenant en outre l'étape suivante :

- déterminer un prix reçu par un vendeur de bois de ladite parcelle, $POptve$, selon la formule suivante :

$$POptve = \frac{PparcT_0 [1 + \%croi]^t}{(1 + \%actu)^t} (1 - \%Opt) - (0.5\,Pcw)\,.$$

où :
- $Pcw = y\,PparcT_0 [1 + \%croi]^t$,
$y$ représentant un pourcentage de facturation à un tiers.

**12.** Méthode selon la revendication 10 ou 11 **caractérisée en ce que** le pourcentage de facturation à un tiers, y, est compris entre 0.01 et 0.1.

**13.** Méthode selon l'une quelconque des revendications 9 à 12 **caractérisée en ce que** le temps $t$ est donné par :

$$t = z + \frac{w - z}{2},$$

où :

- *z* représente une période de temps minimale pour l'approvisionnement dudit volume de bois à partir dudit temps initial $T_0$ ;
- *w* représente une période de temps maximale pour l'approvisionnement dudit volume de bois à partir dudit temps initial $T_0$.

**14.** Méthode selon la revendication 13 **caractérisée en ce que** la période de temps minimale, *z*, est comprise entre 1 et 3 ans.

**15.** Méthode selon la revendication 13 ou 14 **caractérisée en ce que** la période de temps maximale, *w*, est comprise entre 3 et 5 ans.

Fig. 1

Fig. 2

Europäisches Patentamt
European Patent Office
Office européen des brevets

**RAPPORT DE RECHERCHE EUROPEENNE**

Numéro de la demande

EP 13 15 3478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| | Il a été tenu dûment compte de la description et des dessins, conformément à l'article 92 CBE. L'objet revendiqué se rapporte à des procédés figurant dans la liste des éléments exclus de la brevetabilité en vertu de l'article 52(2) et (3) CBE ou à leur automatisation.Les technologies de l'information employées comme moyen pour exécuter lesdits procédés sont classiques. Leur utilisation pour exécuter des procédés dépourvus de caractère technique fait partie des connaissances générales de l'homme du métier, et étaient largement accessibles à tout un chacun à la date de dépôt de la présente demande. Aucune preuve documentaire n'est donc requise. (voir Journal officiel OEB 11/2007, pages 592 et 594)<br><br>----- | | INV.<br>G06Q90/00 |

DOMAINES TECHNIQUES RECHERCHES (IPC)

G06Q

Le présent rapport a été établi pour toutes les revendications

| Lieu de la recherche | Date d'achèvement de la recherche | Examinateur |
|---|---|---|
| Munich | 27 mai 2013 | Hanon, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)